# EUROPÄISCHE PATENTSCHRIFT

(11) **EP 2 142 388 B1**
(45) Veröffentlichungstag und Bekanntmachung des Hinweises auf die Patenterteilung: **15.05.2013**
(21) Anmeldenummer: 08717041.1
(22) Anmeldetag: 22.02.2008
(51) Int. Cl.: B60C 11/03, B60C 11/13, B60C 11/113

(54) **FAHRZEUGLUFTREIFEN**
PNEUMATIC VEHICLE TIRE
PNEUMATIQUE DE VÉHICULE

(30) Priorität: 26.04.2007 DE 102007019719
(43) Veröffentlichungstag der Anmeldung: 13.01.2010
(73) Patentinhaber: Continental Reifen Deutschland GmbH, 30165 Hannover (DE)
(72) Erfinder: WOIDTKE, Oliver, 30855 Langenhagen (DE); BEHR, Ulrich, 30169 Hannover (DE)
(74) Vertreter: Finger, Karsten
(86) Internationale Anmeldenummer: PCT/EP2008/052178
(87) Internationale Veröffentlichungsnummer: WO 2008/131977

(56) Entgegenhaltungen:
- EP-A- 1 541 383
- EP-A- 1 568 514
- JP-A- 2000 318 411
- US-A1- 2003 010 417

## Beschreibung

Die Erfindung betrifft einen Fahrzeugluftreifen mit einem profilierten Laufstreifen mit diagonal, vorzugsweise unter einem Winkel von höchstens 45° zur Umfangsrichtung verlaufenden und in zumindest einer der Laufstreifenhälften vorgesehenen Hauptrillen, welche Profilelemente voneinander trennen, wobei am Boden der Hauptrillen und an zumindest einer der diese Rillen seitlich begrenzenden Flanken Erhebungen ausgebildet sind.

Aus der US 2001/0032691 A1 ist ein Reifen bekannt, welcher einen profilierten Laufstreifen mit Umfangsnuten und Quernuten aufweist. Zur Verbesserung des Wasserabflusses in den Nuten wird vorgeschlagen, am Boden der Nuten eine Vielzahl von in Erstreckungsrichtung der Nuten und parallel zueinander verlaufenden Erhebungen sehr kleiner Abmessungen vorzusehen und parallel zu diesen Erhebungen eine weitere Vielzahl von gleichermaßen klein dimensionierten und parallel zueinander verlaufenden Erhebungen in den diese Nuten begrenzenden Flanken der Profilelemente vorzusehen.

Die EP 1 568 514 A1 betrifft einen Fahrzeugluftreifen mit in Umfangsrichtung umlaufenden breiten Rillen, die durch eine Vielzahl von parallel zueinander verlaufenden Erhebungen strukturiert sind, welche von der einen Flanke über den Boden der jeweiligen Umfangsrille bis über die andere gegenüber liegende Flanke verlaufen. Gegenüber der Umfangsrichtung sind diese Erhebungen unter einem Winkel in der Größenordnung von 10° bis 60° geneigt.

Die EP 1 541 383 A offenbart einen Fahrzeugluftreifen mit einem Laufstreifen mit in Umfangsrichtung oder in seitlicher Richtung verlaufenden breiten Nuten, in welchen voneinander beabstandete parallel zueinander verlaufende Erhebungen ausgebildet sind. Bezüglich der Mittellinie der Nuten sind die Erhebungen unter einem Winkel von 10° bis 50° geneigt.

Bei dem aus der JP 2000 318411 A bekannten Fahrzeugluftreifen weist der Laufstreifen Hauptrillen auf, welche sich von der Laufstreifenmitte insgesamt V-förmig zu den Laufstreifenrändern erstrecken. Am Boden und an den seitlichen Flanken dieser Hauptrillen verlaufen parallel zur Erstreckungsrichtung der Rillen klein dimensionierte Erhebungen. Auch der aus der US 2003/010417 A1 bekannte Fahrzeugluftreifen besitzt eine Laufstreifen mit V-förmig verlaufenden Hauptrillen. In einem breiteren Längsabschnitt jeder Hauptrille ist eine in Längserstreckung derselben verlaufende inselartige Erhebung positioniert.

Aus der EP 1 661 732 A2 ist ein Fahrzeugluftreifen bekannt, welcher auf jeder Seite des Reifenäquators jeweils eine breite, in Umfangsrichtung umlaufende Nut aufweist, welche am Nutboden durch eine gesonderte, in Umfangsrichtung wellenförmig verlaufende Nut strukturiert ist. Bei dem aus der US 6,112,788 bekannten Reifen ist ein Laufstreifen vorgesehen, welcher eine Anzahl von in Umfangsrichtung umlaufenden Umfangsnuten aufweist, deren Boden jeweils mit einer Vielzahl von parallel zueinander und in Umfangsrichtung umlaufenden Erhebungen versehen ist. Diese Maßnahme soll das Entstehen von Einrissen am Nutboden von im Wesentlichen im Querschnitt rechteckförmigen Nuten verhindern.

Die EP 1 216 853 B1 betrifft einen Fahrzeugluftreifen mit einem Laufstreifen mit zumindest einer breiten Umfangsnut, welche im Nutgrund eine Nutgrundrippe aufweist, die sich kontinuierlich über die gesamte Umfangserstreckung der Nut erstreckt. An ihrer oberen Fläche ist die Nutgrundrippe mit einer kleinen Rille versehen, deren Tiefe bis zu 60 % der Höhe der Nutgrundrippe beträgt.

Es sind daher aus dem Stand der Technik verschiedene Ausführungen von Rillen bzw. Nuten bekannt, die mit parallel zueinander verlaufenden relativ klein dimensionierten Erhebungen am Nutgrund und/oder den Nutflanken versehen sind. Die durchwegs in der Erstreckungsrichtung der Rillen orientierten Erhebungen haben jedoch das Wasserableitvermögen nicht wie erwartet verbessert.

Der Erfindung liegt somit die Aufgabe zu Grunde, bei einem Reifen der eingangs genannten Art mit diagonal über den Laufstreifen verlaufenden Hauptrillen Erhebungen am Rillengrund derart anzuordnen und auszuführen, dass das Wasserableitvermögen deutlich unterstützt und verbessert wird.

Gelöst wird die gestellte Aufgabe erfindungsgemäß dadurch, dass sich die Erhebungen am Boden der Hauptrillen parallel zueinander unter einem Winkel zur Umfangsrichtung erstrecken, welcher um mindestens 5° kleiner ist als der Winkel zwischen der Erstreckungsrichtung der Hauptrillen und der Umfangsrichtung, und dass die Erhebungen im Querschnitt sägezahnartig mit einer flachen und einer steilen Flanke ausgeführt sind, wobei die flache Flanke der Reifenmitte zugewandt ist.

Die besondere Form und Anordnung der Erhebungen am Boden der diagonal verlaufenden Hauptrillen zeigt eine deutliche Verbesserung des Wasserableitvermögens der Hauptrillen nach außen, insbesondere vermindern die sägezahnartigen Erhebungen Verwirbelungen und unterstützen eine Wasserströmung in Richtung der Laufstreifenränder.

Gemäß einer bevorzugten Ausführungsform der Erfindung verlaufen die Erhebungen am Boden der Hauptrillen zumindest im Wesentlichen in der Umfangsrichtung des Laufstreifens. Diese Maßnahme ist für eine besonders gezielte und besonders verwirbelungsfreie Ableitung des aus nassem Untergrund in die Hauptrillen des Laufstreifens des Reifens strömenden Wassers von besonderem Vorteil.

In diesem Zusammenhang ist auch der gegenseitige Abstand der Erhebungen und deren Höhe, vom Rillengrund aus gemessen, von Bedeutung. Besonders günstig ist ein gegenseitiger Abstand der Erhebungen, in der Querrichtung des Laufstreifens betrachtet, zwischen 3 mm und 25 mm, vorzugsweise zwischen 3 mm und 11 mm. Die Erhebungen sollten ferner relativ klein dimensioniert sein, indem ihre Höhe zwischen 0,3 mm und 2 mm, vorzugsweise zwischen 0,5 mm und 1 mm, gewählt wird.

Eine weitere Maßnahme, welche das Ableiten von in die Hauptrillen eindringendem Wasser in Richtung zu den laufstreifenaußenseitigen Enden der Hauptrillen unterstützt, besteht darin, dass auch an den Rillenflanken der Hauptrillen Erhebungen vorgesehen sind. Bei einem Laufstreifenprofil, welches laufrichtungsgebunden ausgeführt ist, werden die weiteren Erhebungen zumindest an der beim Abrollen des Reifens aus dem Untergrund auslaufenden Rillenflanke der Hauptrillen, vorzugsweise in Verlängerung der Erhebungen an den Rillenböden, ausgebildet. Bei einem nicht laufrichtungsgebunden ausgeführten Laufstreifenprofil werden beide Rillenflanken der Hauptrillen mit solchen Erhebungen versehen.

Diese weiteren Erhebungen werden insbesondere mit einem Querschnitt ausgeführt, welche vom Querschnitt der Erhebungen am Rillengrund der Hauptrillen abweicht. Für das Drainagevermögen der Hauptrillen hat es sich dabei als vorteilhaft herausgestellt, wenn die weiteren Erhebungen einen symmetrischen Querschnitt, beispielsweise in der Form eines Kreisabschnittes, aufweisen und wenn ihre Höhe zwischen 0,3 mm und 2 mm, vorzugsweise zwischen 0,5 mm und 1 mm, gewählt wird.

Weitere Merkmale, Vorteile und Einzelheiten der Erfindung werden anhand der Zeichnung, die ein Ausführungsbeispiel darstellt, näher beschrieben. Dabei zeigen
Fig. 1 eine schematische Draufsicht auf eine Teilabwicklung eines profilierten Laufstreifens eines Fahrzeugluftreifens,
Fig. 2 einen Schnitt durch den Laufstreifen entlang der Linie II-II der Fig. 1,
Fig. 3 eine Ansicht auf einen Teilbereich einer Rillenflanke und
Fig. 4 einen Schnitt entlang der Linie IV-IV der Fig. 3.

Die Erfindung befasst sich mit einer speziellen Ausgestaltung des Rillengrundes und der Rillenflanken von Hauptrillen in Laufstreifenprofilen von Fahrzeugluftreifen, insbesondere für Personenkraftwagen. Der sonstige Aufbau des Reifens mit Wulstbereichen mit Wulstkernen, einer Radialkarkasse, Seitenwänden und einem mehrlagigen Gürtel kann auf bekannte Weise und demnach gemäß dem Stand der Technik erfolgen.

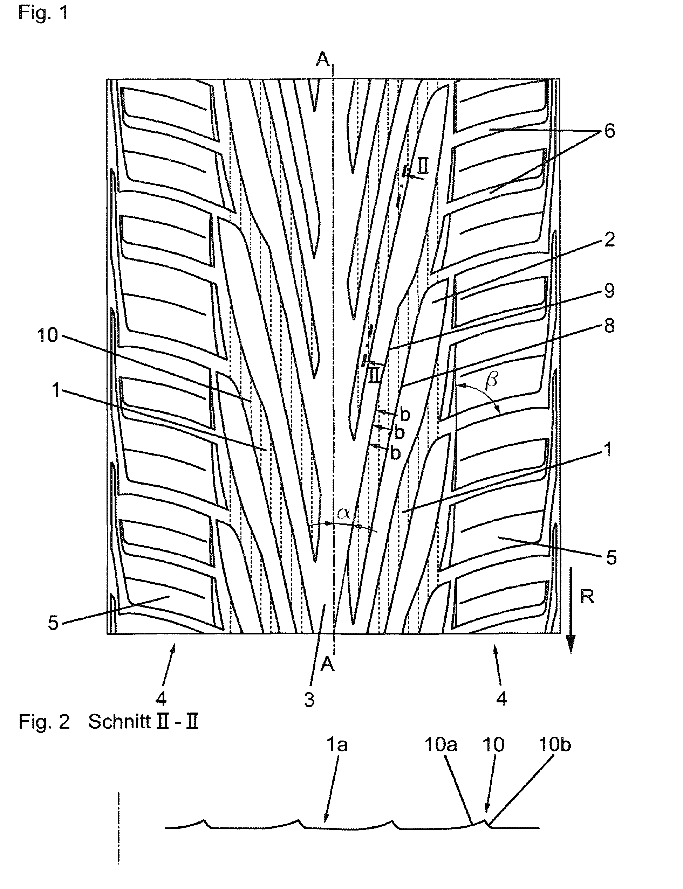

Fig. 1 zeigt eine Draufsicht auf ein Ausführungsbeispiel eines profilierten Laufstreifens, welcher laufrichtungsgebunden ausgeführt ist. In jeder Laufstreifenhälfte verlaufen im Wesentlichen parallel zueinander Hauptrillen 1, derart, dass die Hauptrillen 1 in der einen Laufstreifenhälfte gemeinsam mit den Hauptrillen 1 in der zweiten Laufstreifenhälfte eine gepfeilte Anordnung ergeben. Die beiden Laufstreifenhälften sind bei der dargestellten Ausführungsform - bis auf einen gegenseitigen geringfügigen Versatz in Umfangsrichtung - spiegelbildlich zum Reifenäquator, welcher durch die Linie A-A versinnbildlicht ist, ausgeführt. Laufstreifeninnenseitig enden die Hauptrillen 1 sacknutenartig in einem geringen Abstand vom Reifenäquator A-A, laufstreifenaußenseitig zweigen von den Hauptrillen 1 jeweils zwei oder drei Quernuten 6 ab. Die Hauptrillen 1 verlaufen unter einem spitzen Winkel α in der Größenordnung von 20° zum Reifenäquator A-A und sind voneinander durch lang gestreckte Profilelemente 2, deren Erstreckungsrichtung im Wesentlichen mit der Erstreckung der Hauptrillen 1 übereinstimmt, getrennt. Die lang gestreckten Profilelemente 2 gehen beim Reifenäquator A-A in eine Umfangsrippe 3 über. Seitlich der lang gestreckten Profilelemente 2 schließt jeweils eine Schulterblockreihe 4 an, deren Einzelblöcke 5 etwa parallelogrammförmig gestaltet sind, wobei zwischen den in Umfangsrichtung benachbarten Blöcken 5 die Quernuten 6 verlaufen, welche nahezu in Reifenquerrichtung orientiert sind. Der Winkel β, den die Quernuten 6 mit der Reifenumfangsrichtung einschließen beträgt in der Größenordnung von 80°. Die Laufstreifenprofilierung wird dabei so ausgelegt, dass entweder zwei oder drei Schulterblöcke 5 einem lang gestreckten Profilelement 2 zugeordnet sind. Diese Zuordnung ergibt sich durch die Variation der Umfangslängen der lang gestreckten Profilelemente 2 und der Blöcke 5. Wie bekannt, dient diese Maßnahme der Minimierung und Vergleichmäßigung des Abrollgeräusches.

Laufstreifenprofile des in Fig. 1 gezeigten Typs werden derart ausgelegt, dass der Winkel α einen Wert im Bereich von 15° bis 30° und der Winkel β einen Wert im Bereich von 70° bis 85° einnimmt.

Die Rillenböden 1a und die von den lang gestreckten Profilelementen 2 gebildeten Rillenflanken 9 der Hauptrillen 1 sind speziell profiliert. Wie Fig. 1 in Verbindung mit Fig. 2 zeigt, ist der Boden 1a jeder Hauptrille 1 sägezahnartig gewellt. Die einzelnen sägezahnartigen Erhebungen 10 sind, in der Querrichtung des Laufstreifens betrachtet, voneinander zumindest im Wesentlichen gleich beabstandet, der gegenseitige Abstand beträgt zwischen 3 mm und 25 mm, vorzugsweise zwischen 3 mm und 10 mm, insbesondere etwa 5mm. Jede sägezahnartige Erhebung 10 weist eine gegenüber dem Rillenboden 1a gering geneigte längere Flanke 10a, die im Querschnitt beispielsweise entlang eines Kreisbogenabschnittes mit einem Radius von etwa 10 mm verläuft, und eine von der Spitze jeder Erhebung 10 nahezu in radialer Richtung abfallenden Flanke 10b auf, die beispielsweise ein Abschnitt eines Kreisbogens mit einem Radius von etwa 0,75 mm ist. Die Erhebungen 10 werden somit relativ klein dimensioniert, wobei ihre Höhe, vom Rillengrund aus gemessen zwischen 0,3 mm und 2 mm, vorzugsweise zwischen 0,5 mm und 1 mm, beträgt. Jede sägezahnartige Erhebung 10 verläuft vorzugsweise in Umfangsrichtung des Laufstreifens und wird in den in Umfangsrichtung benachbarten Hauptrillen 1 an deren Rillenböden 1a in Umfangsrichtung fortgesetzt. Die flachen Flanken 10a sind dem Reifenäquator A-A zugewandt und steigen daher in Richtung zu den Laufstreifenaußenseiten an. Dadurch wird Wasser am Boden der Hauptrillen 1 nahezu verwirbelungsfrei kanalisiert und gezielt in Richtung der laufstreifenaußenseitigen Enden der Hauptrillen 1 transportiert.

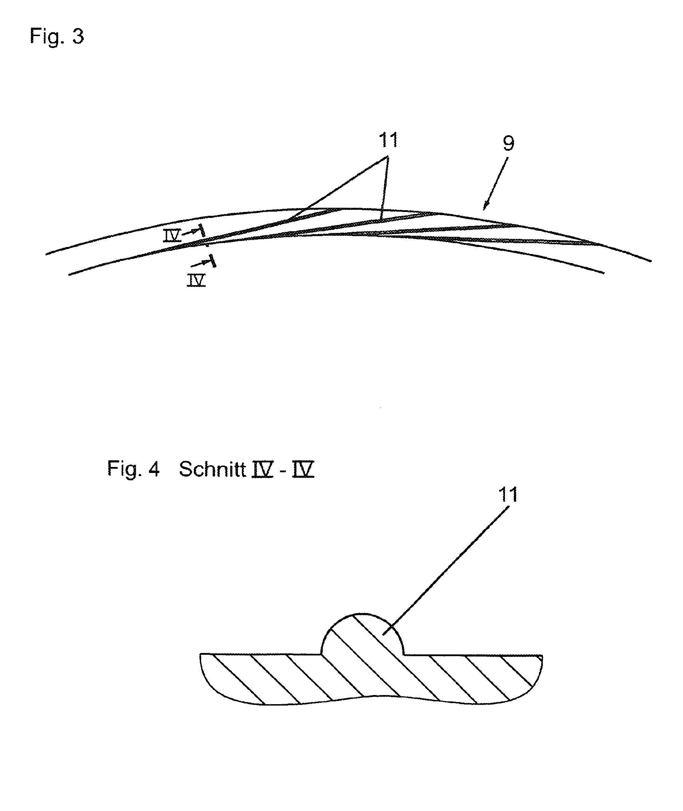

Eine weitere Maßnahme, die die Entwässerung des Laufstreifens von der Mitte zu den seitlichen Rändern verbessert, ist in Fig. 3 gezeigt. Dabei wird vorerst darauf verwiesen, dass ein Reifen mit einem Laufstreifenprofil, wie in Fig. 1 gezeigt, am Fahrzeug derart montiert wird, dass beim Abrollen in Richtung des in Fig. 1 gezeigten Pfeiles R die laufstreifeninnenseitig gelegenen Enden der Hauptrillen 1 zuerst mit dem Untergrund in Kontakt kommen. Demnach tritt die Rillenflanke 8 vor der Rillenflanke 9 in die Kontaktfläche mit dem Untergrund ein. Zumindest die Flanke 9 ist in Fortsetzung der sägezahnartigen Erhebungen 10 mit Erhebungen 11 versehen, welche, wenn der Reifen in Draufsicht, gemäß Fig. 1, betrachtet wird, in Umfangsrichtung verlaufen. Wird die Flanke 9 in einer Ansicht gemäß den Pfeilen b in Fig. 1 betrachtet, so ergibt sich das in Fig. 3 gezeigte Bild mit schräg über die Rillenflanke 9 verlaufenden Erhebungen 11. Der Querschnitt der Erhebungen 11 unterscheidet sich vom Querschnitt der Erhebungen 10, insbesondere werden die Erhebungen 11 mit einem runden, insbesondere einem halbkreisförmigen Querschnitt versehen, wie es in Fig. 4 gezeigt ist. Die Erhebungen 11 sind ebenso wie die Erhebungen 10 vergleichsweise klein dimensioniert, bei einer Ausführung wie in Fig. 4 gezeigt beträgt der Radius des Kreisbogens 0,75 mm. Die Erhebungen 11 unterstützen das Ableiten von Wasser in den Hauptrillen 1 in Richtung zu deren laufstreifenaußenseitig gelegenen Enden.

Abweichend von der dargestellten Ausführungsform können sich die Erhebungen 10 und 11 auch abweichend von der Umfangsrichtung erstrecken, wobei der Winkel, den sie mit der Umfangsrichtung einschließen um mindestens 5° kleiner ist als der Winkel α, den die Hauptrillen 1 mit der Reifenumfangsrichtung, dem Reifenäquator A-A, einschließen.

Die Erfindung ist auch auf Laufstreifenprofile anwendbar, die nicht laufrichtungsgebunden ausgeführt sind. Ein Profil kann beispielsweise derart ausgeführt sein, dass in Anlehnung an Fig. 1 in den beiden Laufstreifenhälften die Hauptrillen 1 und die lang gestreckten Profilelemente 2 übereinstimmende Orientierungen aufweisen. Bei einer derartigen Ausführungsvariante werden an beiden Flanken 8, 9 der Hauptrillen Erhebungen 11 als Fortsetzungen der Erhebungen 10 ausgebildet.

Es ist ferner grundsätzlich möglich, die Erhebungen 11 in den Rillenflanken 8, 9 mit einem Querschnitt auszuführen, der dem Querschnitt der Erhebungen 10 am Boden der Hauptrillen 1 entspricht. Des Weiteren ist es möglich, diese Erhebungen 11 mit einem anderen, beispielsweise einem dreieckförmigen Querschnitt zu versehen.

### Bezugszeichenliste

1 Hauptrillen
1a Rillenboden
2 lang gestreckte Profilelemente
3 Umfangsrippe
4 Schulterblockreihe
5 Einzelblöcke
6 Quernuten
8 Flanken
9 Flanken
10 Erhebungen
10a Flanke
10b Flanke
11 Erhebungen

## Patentansprüche

1. Fahrzeugluftreifen mit einem profilierten Laufstreifen mit diagonal, vorzugsweise unter einem Winkel (α) von höchstens 45° zur Umfangsrichtung verlaufenden und in zumindest eine der Laufstreifenhälften vorgesehenen Hauptrillen (1), welche Profilelemente (2) voneinander trennen, wobei am Boden (1a) der Hauptrillen (1) und an zumindest einer der diese Rillen (1) seitlich begrenzenden Flanken (9) Erhebungen (10, 11) ausgebildet sind,
**dadurch gekennzeichnet,**
**dass** sich die Erhebungen (10) am Boden (1a) der Hauptrillen (1) parallel zueinander unter einem Winkel (α) zur Umfangsrichtung erstrecken, welcher um mindestens 5° kleiner ist als der Winkel zwischen der Erstreckungsrichtung der Hauptrillen (1) und der Umfangsrichtung, und dass die Erhebungen (10) im Querschnitt sägezahnartig mit einer flachen und einer steilen Flanke (10a, 10b) ausgeführt sind, wobei die flache Flanke (10a) der Reifenmitte zugewandt ist.

2. Fahrzeugluftreifen nach Anspruch 1, **dadurch gekennzeichnet, dass** sich die Erhebungen (10) am Boden (1a) der Hauptrillen (1) zumindest im Wesentlichen in der Umfangsrichtung des Laufstreifens erstrecken.

3. Fahrzeugluftreifen nach Anspruch 1 oder 2, **dadurch gekennzeichnet, dass** der gegenseitige Abstand der Erhebungen (10), in der Querrichtung des Laufstreifens betrachtet, zwischen 3 mm und 25mm, insbesondere zwischen 3 mm und 10 mm, beträgt.

4. Fahrzeugluftreifen nach einem der Ansprüche 1 bis 3, **dadurch gekennzeichnet, dass** die Höhe der Erhebungen (10), vom Rillengrund aus gemessen, zwischen 0,3 mm und 2 mm, vorzugsweise zwischen 0,5 mm und 1 mm, beträgt.

5. Fahrzeugluftreifen nach einem der Ansprüche 1 bis 4 mit einem laufrichtungsgebundenen ausgeführten Laufstreifen, **dadurch gekennzeichnet, dass** an den auslaufenden Rillenflanken (9) der Hauptrillen (1), vorzugsweise in Verlängerung der Erhebungen (10), weitere Erhebungen (11) ausgebildet sind.

6. Fahrzeugluftreifen nach einem der Ansprüche 1 bis 4 mit einem nicht laufrichtungsgebundenen Laufstreifen, **dadurch gekennzeichnet, dass** an beiden Rillenflanken (8, 9) der Hauptrillen (1), vorzugsweise in Verlängerung der Erhebungen (10), weitere Erhebungen (11) ausgebildet sind.

7. Fahrzeugluftreifen nach einem der Ansprüche 1 bis 6, **dadurch gekennzeichnet, dass** die weiteren Erhebungen (11) einen Querschnitt aufweisen, welcher vom Querschnitt der Erhebungen (10) am Rillengrund (1a) der Hauptrillen (1) abweicht.

8. Fahrzeugluftreifen nach einem der Ansprüche 5 bis 7, **dadurch gekennzeichnet, dass** die weiteren Erhebungen (11) einen symmetrischen Querschnitt, beispielsweise in der Form eines Kreisabschnittes, aufweisen.

9. Fahrzeugluftreifen nach einem der Ansprüche 5 bis 7, **dadurch gekennzeichnet, dass** die Höhe der weiteren Erhebungen (11) zwischen 0,3 mm und 2 mm, vorzugsweise zwischen 0,5 mm und 1 mm, beträgt.

## Claims

1. Pneumatic vehicle tyre having a profiled tread with diagonal main grooves (1) which preferably run at an angle (α) of at maximum 45° with respect to the circumferential direction, are provided in at least one of the tread halves and divide profile elements (2) from one another, wherein raised portions (10, 11) are formed on the base (1a) of the main grooves (1) and on at least one of the edges (9) bounding these grooves (1) laterally,
**characterized**
**in that** the raised portions (10) on the base (1a) of the main grooves (1) extend parallel to one another at an angle (α) with respect to the circumferential direction which is at least 5° smaller than the angle between the direction of extent of the main grooves (1) and the circumferential direction, and in that the raised portions (10) are embodied in the manner of saw teeth in cross section with a flat and a steep edge (10a, 10b), wherein the flat edge (10) faces the centre of the tyre.

2. Pneumatic vehicle tyre according to Claim 1, **characterized in that** the raised portions (10) on the base (1a) of the main grooves (1) extend at least substantially in the circumferential direction of the tread.

3. Pneumatic vehicle tyre according to Claim 1 or 2, **characterized in that** the spacing between the raised portions (10a) is between 3 mm and 25 mm, in particular between 3 mm and 10 mm, when viewed in the transverse direction of the tread.

4. Pneumatic vehicle tyre according to one of Claims 1 to 3, **characterized in that** the height of the raised portions (10) is, when measured from the groove base, between 0.3 mm and 2 mm, preferably between 0.5 mm and 1 mm.

5. Pneumatic vehicle tyre according to one of Claims 1 to 4 having a tread which is embodied so as to be tied to the running direction, **characterized in that** further raised portions (11) are formed on the running-out groove edges (9) of the main grooves (1), preferably as an extension of the raised portions (10).

6. Pneumatic vehicle tyre according to Claims 1 to 4, having a tread which is not tied to the running direction, **characterized in that** further raised portions (11) are formed on both groove edges (8, 9) of the main grooves (1), preferably as an extension of the raised portions (10).

7. Pneumatic vehicle tyre according to one of Claims 1 to 6, **characterized in that** the further raised portions (11) have a cross section which differs from the cross section of the raised portions (10) at the groove base (1a) of the main grooves (1).

8. Pneumatic vehicle tyre according to one of Claims 5 to 7, **characterized in that** the further raised portions (11) have a symmetrical cross section, for example in the form of a circular section.

9. Pneumatic vehicle tyre according to one of Claims 5 to 7, **characterized in that** the height of the further raised portions (11) is between 0.3 mm and 2 mm, preferably between 0.5 mm and 1 mm.

## Revendications

1. Pneu de véhicule comprenant une bande de roulement profilée avec des rainures principales (1) s'étendant en diagonale, de préférence suivant un angle (α) de 45° maximum par rapport à la direction périphérique et prévues dans au moins l'une des moitiés de bande de roulement, lesquelles séparent des éléments profilés (2) les uns des autres, des rehaussements (10, 11) étant réalisés sur le fond (1a) des rainures principales (1) et sur au moins l'un des flancs (9) limitant latéralement ces rainures (1),
**caractérisé en ce que**
les rehaussements (10) s'étendent sur le fond (1a) des rainures principales (1) parallèlement les uns aux autres suivant un angle (α) par rapport à la direction périphérique, cet angle étant inférieur d'au moins 5° à l'angle entre la direction d'étendue des rainures principales (1) et la direction périphérique, et **en ce que** les rehaussements (10) sont réalisés en forme de dents de scie en section transversale avec un flanc plat et un flanc raide (10a, 10b), le flanc plat (10a) étant tourné vers le centre du pneu.

2. Pneu de véhicule selon la revendication 1, **caractérisé en ce que** les rehaussements (10) s'étendent sur le fond (1a) des rainures principales (1) au moins essentiellement dans la direction périphérique de la bande de roulement.

3. Pneu de véhicule selon la revendication 1 ou 2, **caractérisé en ce que** la distance mutuelle des rehaussements (10), considérée dans la direction transversale de la bande de roulement, vaut entre 3 mm et 25 mm, notamment entre 3 mm et 10 mm.

4. Pneu de véhicule selon l'une quelconque des revendications 1 à 3, **caractérisé en ce que** la hauteur des rehaussements (10), mesurée depuis le fond de rainure, vaut entre 0,3 mm et 2 mm, de préférence entre 0,5 mm et 1 mm.

5. Pneu de véhicule selon l'une quelconque des revendications 1 à 4, comprenant une bande de roulement réalisée de manière associée à la direction de roulement, **caractérisé en ce que** des rehaussements supplémentaires (11) sont réalisés sur les flancs de rainure se terminant (9) des rainures principales (1), de préférence dans le prolongement des rehaussements (10).

6. Pneu de véhicule selon l'une quelconque des revendications 1 à 4, comprenant une bande de roulement non associée à la direction de roulement, **caractérisé en ce que** des rehaussements supplémentaires (11) sont réalisés sur les deux flancs de rainure (8, 9) des rainures principales (1), de préférence dans le prolongement des rehaussements (10).

7. Pneu de véhicule selon l'une quelconque des revendications 1 à 6, **caractérisé en ce que** les rehaussements supplémentaires (11) présentent une section transversale qui s'écarte de la section transversale des rehaussements (10) au niveau du fond de rainure (1a) des rainures principales (1).

8. Pneu de véhicule selon l'une quelconque des revendications 5 à 7, **caractérisé en ce que** les rehaussements supplémentaires (11) présentent une section transversale symétrique, par exemple sous la forme d'une portion de cercle.

9. Pneu de véhicule selon l'une quelconque des revendications 5 à 7, **caractérisé en ce que** la hauteur des rehaussements supplémentaires (11) est comprise entre 0,3 mm et 2 mm, de préférence entre 0,5 mm et 1 mm.
